# EUROPÄISCHE PATENTSCHRIFT

(11) **EP 2 414 791 B1**
(45) Veröffentlichungstag und Bekanntmachung des Hinweises auf die Patenterteilung: **29.05.2013**
(21) Anmeldenummer: 10718456.6
(22) Anmeldetag: 29.03.2010
(51) Int. Cl.: G01F 23/22, G21C 17/035, F16L 19/065

(54) **ABDICHTVORRICHTUNG FÜR EINE VORRICHTUNG ZUR FÜLLSTANDSMESSUNG IN EINEM DRUCKBEHÄLTER EINER KERNTECHNISCHEN ANLAGE**
SEALING DEVICE FOR A LIQUID LEVEL SENSOR IN A PRESSURE VESSEL OF A NUCLEAR REACTOR
DISPOSITIF D'ÉTANCHÉITÉ POUR UN DISPOSITIF DE MESURE DE NIVEAU D'UN LIQUIDE DANS UN RESERVOIR SOUS PRESSION D'UNE CENTRALE NUCLEAIRE

(30) Priorität: 02.04.2009 DE 102009015629
(43) Veröffentlichungstag der Anmeldung: 08.02.2012
(73) Patentinhaber: Areva NP GmbH, 91052 Erlangen (DE)
(72) Erfinder: LIU, Yubo, 63067 Offenbach (DE); HARFST, Wilfried, 55130 Mainz (DE); KAERCHER, Sacha, 90000 Belfort (FR); VOGT, Wolfgang, 63796 Kahl (DE)
(74) Vertreter: Tergau & Walkenhorst
(86) Internationale Anmeldenummer: PCT/EP2010/001965
(87) Internationale Veröffentlichungsnummer: WO 2010/112187

(56) Entgegenhaltungen:
- WO-A1-2006/037668
- DE-A1- 2 144 087
- DE-A1- 4 002 163
- DE-A1- 19 541 622
- FR-A1- 2 483 671
- US-A- 3 889 989
- US-A- 4 440 717

## Beschreibung

Die Erfindung betrifft eine Vorrichtung zur Füllstandsmessung in einem Flüssigkeitsbehälter, insbesondere in einem Druckbehälter einer kerntechnischen Anlage, mit mindestens einem Thermoelement und mit einer zugehörigen Abdichtvorrichtung.

Derartige Abdichtvorrichtungen, die bei Vorrichtungen zur Füllstandsmessung in einem Flüssigkeitsbehälter eingesetzt werden können, sind grundsätzlich bekannt, etwa aus der WO 2006/037668 A1. Sie sind weiterhin bekannt aus der DE 2 144 087 A1, siehe dort insbesondere FIG. 2 und die zugehörige Beschreibung. Schließlich ist aus der DE 4 002 163 A1 eine Abdichtvorrichtung für eine einen Deckel eines Druckwasserreaktor durchquerende Gerätesäule bekannt.

Messvorrichtungen oder Füllstandssonden, bei denen anhand der von einem beheizten Thermoelement erzeugten Thermospannung auf die Füllstandshöhe in einem Flüssigkeitsbehälter geschlossen wird, werden insbesondere in Kernkraftwerken eingesetzt, da sie gegenüber auf anderen Messprinzipien beruhenden Messvorrichtungen vergleichsweise unempfindlich gegen radioaktive Strahlung sind und daher auch bei einem Störfall mit gegebenenfalls erhöhten Strahlungswerten zuverlässig arbeiten können. Derartige Messvorrichtungen finden insbesondere im Reaktordruckbehälter eines Druckwasserreaktors Anwendung, um dort die Pegelhöhe der durch den Primärkreislauf der Kraftwerksanlage strömenden Kühlflüssigkeit oberhalb der Brennelemente zu überwachen.

Das Messprinzip nutzt die unterschiedlichen Wärmeübergangscharakteristiken aus, die beim Übergang der Wärme von einem Heizelement auf ein das Heizelement umgebendes flüssiges Kühlmittel einerseits und auf ein gas- oder dampfförmiges Medium andererseits auftreten. Solange das Heizelement von flüssigem Kühlmedium umgeben ist, wird die von ihm erzeugte Wärme rasch abgeführt, sodass selbst in seiner unmittelbaren Umgebung die Temperatur nur unwesentlich oberhalb derjenigen Umgebungstemperatur liegt, die sich im unbeheizten Fall einstellen würde. Tritt beispielsweise während des regulären Reaktorbetriebs oder auch bei einem Reaktorstörfall die Situation ein, dass betriebsbedingt oder aufgrund eines Druckverlustes im Primärkreislauf der Flüssigkeitspegel im Reaktordruckbehälter unter die Höhe des Heizelements sinkt, dieses mithin von dampfförmigem Kühlmittel umgeben ist, so verschlechtern sich die Wärme-übergangseigenschaften. Dies hat zur Folge, dass die Temperatur in der Umgebung des Heizelements ansteigt, was sich durch ein benachbart zum Heizelement angebrachtes Thermometer oder einen Temperaturmessfühler nachweisen lässt. Aufgrund ihrer zuverlässigen und robusten Betriebsweise kommen als Temperaturmessfühler in der Regel Thermoelemente zum Einsatz, die eine im Wesentlichen der Temperatur proportionale Thermospannung liefern.

Die hier eingesetzten Thermoelemente werden von Mineralwerkstoffen aufweisenden Ummantelungen umgeben, die zumindest an einer Stelle im Schutzbehälter bzw. Containment über eine Abdichtvorrichtung eventuell auch lösbar miteinander verbunden sein müssen, um die gewünschten Einsatzbedingungen zu erfüllen. Eine derartige Verbindung muss den Anforderungen der Loca Norm entsprechen und sich dennoch sehr leicht lösen lassen. Mit LOCA (loss of coolant accident) wird in der Kerntechnik ein Störfall bezeichnet, bei dem durch ein Leck Kühlmittel aus dem Kühlkreislauf des Kernreaktors austritt. Ein großer Kühlmittelverluststörfall ist in der Regel Basis für die Auslegung der Nachwärmeabfuhr- und Notkühlsysteme sowie des Sicherheitsbehälters eines Kernreaktors. Dabei wird der vollständige Bruch einer Hauptkühlmittelleitung unterstellt. Dieser Störfall wird als "größter anzunehmender Unfall" (Gau) bezeichnet, der auf keinen Fall eintreten darf.

In modernen Kernkraftwerken gibt es vier Sicherheitsebenen: Die erste Ebene engspricht dem Normalbetrieb des Kraftwerkes. Hier sollen Störungen möglichst vermieden werden. Trotzdem wird unterstellt, dass Störungen auftreten. In der zweiten Ebene, dem "anomalen Betrieb", wird das Ziel verfolgt, diese Störungen einzudämmen und zu verhindern, dass sie sich zu Störfällen ausweiten. Auch hier wird systematisch unterstellt, dass dieses Ziel nicht erreicht wird und in der dritten Ebene, der Ebene der Störfallbeherrschung, werden Störfälle durch sehr zuverlässige eigene Sicherheitssysteme möglichst aufgefangen. Doch auch hier wird systematisch ein Versagen unterstellt und in der vierten Ebene wird mit "anlageinternen Notfallschutzmaßnahmen" versucht, die Auswirkungen des Störfalls möglichst auf die Anlage selbst zu beschränken und einschneidende Maßnahmen in der Umgebung (insbesondere Evakuierung) nicht notwendig werden zu lassen. Insbesondere unter extremen Betriebsbedingungen sollte die Füllstandsmessung zuverlässig arbeiten, um effektiv Maßnahmen zum Schutz der Anlage und der Umgebung ergreifen zu können.

Der Erfindung liegt daher die Aufgabe zugrunde, eine Abdichtvorrichtung für eine Vorrichtung zur Füllstandsmessung in einem Flüssigkeitsbehälter, insbesondere in einem Reaktorbehälter, derart auszubilden, dass eine einwandfreie, druckwasserdichte Verbindung zwischen einem Druckrohr und einer daran angeschlossenen Rohrleitung zur Aufnahme eines Thermoelements und dem Reaktor geschaffen wird, ohne das Thermoelement und/oder seine Ummantelung zu beschädigen.

Diese Aufgabe wird erfindungsgemäß gelöst durch die Merkmale des Anspruchs 1.

Unter anderem ist eine Abdichtvorrichtung für eine Vorrichtung zur Füllstandsmessung in einem Flüssigkeitsbehälter, insbesondere in einem Druckbehälter einer kerntechnischen Anlage, vorgesehen mit mindestens einem Thermoelement, das mit Hilfe eines Druckrohrs mit dem Druckbehälter und mittels einer an das Druckrohr angeschlossenen Rohrleitung mit einer Auswerteeinheit verbunden ist, wobei das Druckrohr und die Rohrleitung mittels einer Rohr-Schraubverbindung miteinander verbunden sind, die ein Mittelteil mit zwei Gewindestücken umfasst, wobei das eine Gewindestück mit Hilfe einer Verschraubung an eine Rohrhülse und das andere Gewindestück mit Hilfe einer weiteren Verschraubung an das Druckrohr angeschlossen ist.

Die Erfindung geht von der Überlegung aus, dass eine Abdichtvorrichtung so beschaffen sein sollte, dass sie nicht nur den Anforderungen auf allen Sicherheitsebenen entspricht, sondern auch bei einem größten anzunehmenden Unfall (Gau) einsatzfähig bleibt. Die Abdichtvorrichtung sollte auch so beschaffen sein, dass auch beim Einsatz von Mineralwerkstoffe aufweisenden Verbindungsteilen bzw. Kabelumhüllungen keine Beschädigungen an den einzelnen Teilen, insbesondere an den Kabelumhüllungen des Thermoelements, verursacht werden. Insbesondere Vibrationen und Erschütterungen der eine Abdichtvorrichtung umgebenden Bauteile werden bei einer direkten Verbindung von Abdichtvorrichtung und Mineralwerkstoffkabel unmittelbar auf das Kabel weitergegeben. Dadurch kann es zu einer Beschädigung des Thermoelements und somit zu einem Wegfall einer verlässlichen Füllstandsanzeige kommen. Um auch in extremen betrieblichen Situationen eine zuverlässige Füllstandsanzeige zu gewährleisten, sollte das Thermoelement gegenüber solchen Beeinträchtigungen geschützt werden.

Wie nunmehr erkannt wurde, lässt sich ein derartiger Schutz des Thermoelementes erreichen, indem das Thermoelement bereichsweise von einer Rohrhülse umgegeben ist und die Abdichtung an der Rohrhülse und nicht direkt auf dem Thermoelement erfolgt. Dadurch werden Schwingungen der Abdichtvorrichtung auf die Rohrhülse und nicht direkt auf das Thermoelement bzw. seine Ummantelung übertragen.

Es ist zudem von großer Wichtigkeit, dass eine derartige Abdichtvorrichtung druckwasserdicht konstruiert ist. Die Abdichtvorrichtung stellt die primäre Druckbarriere zwischen dem Druckbehälter und dem Innenbereich des Sicherheitsbehälters dar. Eine Leckage der primären Druckbarriere würde dazu führen, dass die Kühlflüssigkeit aus dem Druckbehälter durch die Leitung des Thermoelements zur Montagewand an der Innenseite des Sicherheitsbehälters transferiert würde und dort eine Leckage innerhalb des Sicherheitsbehälters auftreten würde, da die Montagewand und die dortigen Kabelverbindungen nicht für solche Bedingungen ausgelegt sind.

Dabei ist die an die Rohrleitung angeschlossene Rohrhülse mit der weiteren Rohr-Schraubverbindung fest verbunden, wobei sich das Anschlusselement auf der Rohrhülse abstützt. Hierdurch wird eine druckwasserfeste Verbindung zwischen der Rohrleitung und dem Druckbereich im Reaktor bzw. dem Druckrohr auf einfache kostengünstige Weise geschaffen und vermieden, dass bei der Montage der Abdichtvorrichtung bzw. von Teilen der Rohrleitung oder der Ummantelung Beschädigungen auftreten.

Weiterhin ist es vorgesehen, dass zwei Anschlussstücke Teil des rohrförmigen Anschlusselements mit je einem Gewindestück sind, die unterschiedlich große Innendurchmesser aufweisen, wobei das Anschlussstück mit dem kleineren Innendurchmesser auf das stirnseitige Ende der Rohrhülse und das Anschlussstück mit dem größeren Innendurchmesser auf das stirnseitige Ende des Druckrohrs geschoben ist. Da das Anschlusselement mit den beiden sich diametral erstreckenden, je ein Gewindeteil aufweisenden Anschlussstücken versehen ist, ergibt sich lediglich ein Bauteil, das sich kostengünstig herstellen lässt. Ferner lassen sich durch die wenigen Bauteile, die für die Abdichtvorrichtung erforderlich sind, die Lagerhaltungskosten senken.

Da im zuletzt geschilderten Fall beide Anschlussstücke mit den Gewindestücken koaxial zueinander ausgerichtet sind, wird die Montage der Abdichtvorrichtung wesentlich erleichtert, da, wie bereits erwähnt, mit weniger Losteilen für die Abdichtvorrichtung ausgekommen werden kann. Für die Montage der Abdichtvorrichtung braucht lediglich das Anschlusselement bzw. Mittelteil auf die Rohrhülse mit den bereits aufgedrehten Rohrmuttern geschoben und anschließend auf den Gewindestücken fest angezogen zu werden. Hierdurch kann eine druckwasserfeste Verbindung zwischen der Rohrleitung und dem Druckrohr geschaffen werden.

Vorteilhafterweise wird auf die beiden Gewindestücke je eine Rohrmutter geschraubt, die jeweils ein Dichtungselement gegen den Außenumfang der Rohrhülse bzw. des Druckrohrs presst. Mit Hilfe des Dichtungselements, das in vorteilhafter Weise als Quetschring ausgebildet ist, wird eine einwandfreie, dauerhafte Verbindung zwischen der Rohrhülse bzw. der Rohrleitung und dem Druckrohr geschaffen, die sich wieder lösen lässt. Normalerweise stellt die Abdichtvorrichtung eine dauerhafte Verbindung zwischen der Rohrleitung und dem Druckrohr her. Die beiden Ringspalte dienen als Dehnfuge zwischen dem Druckrohr, der Rohrhülse und dem Thermoelement, insbesondere wenn diese Teile unterschiedlich große Wärmekoeffizienten aufweisen.

Erfindungsgemäß ist zwischen dem Innendurchmesser des rohrförmigen Druckrohrs und dem Außendurchmesser der Rohrhülse ein Ringspalt und zwischen dem Außendurchmesser des Thermoelements und dem Innendurchmesser der Rohrhülse ein weiterer Ringspalt gebildet, wobei der weitere Ringspalt und die sich daran anschließende Rohrleitung mit Hilfe der Lötverbindung zwischen dem Thermoelement, der Rohrhülse und der Rohr-Schraubverbindung abgedichtet wird. Sind die Rohrhülse und das Druckrohr aus unterschiedlichen Materialien gebildet, kann auch bei unterschiedlichen Wärmeausdehnungs-Koeffizienten ein Längenausgleich zwischen Rohrhülse und Druckrohr stattfinden.

Das Thermoelement und die Rohrhülse sind durch eine Lötverbindung mechanisch miteinander verbunden. Diese Lötverbindung kann mit bekannten und im Bereich von Kernkraftwerken zertifizierten Verfahren hergestellt werden. Durch die Lötverbindung wird sichergestellt, dass sich das Thermoelement nicht frei in der Rohrhülse bewegen und Schaden nehmen kann und sich Thermoelement und Rohrhülse nicht gegeneinander verschieben können. Die Druckübertragung der Verschraubung im Übergangsbereich von Rohrhülse und Druckrohr auf die Rohrhülse findet vorzugsweise in einem möglichst kleinen Bereich der Lötverbindung statt, wodurch eine unmittelbare Übertragung von Schwingungen der Verschraubungselemente auf die Rohrhülse und weiter auf das Thermoelement über die Lötverbindung gering gehalten wird. Im rohrleitungsseitigen Bereich der Verschraubung sollte die Rohrhülse mit dem in ihrem Innern geführten Thermoelement einen Ringspalt bilden, um die Übertragung von Schwingungen, Erschütterungen und Vibrationen auf das Thermoelement so gering wie möglich zu halten.

Ferner ist es von Vorteil, dass zwei aufeinander geschobene Endstücke der Rohrhülse und des Druckrohrs einen Überlappungsbereich bilden, der eine Länge aufweist, die kleiner, gleich groß oder größer als der Außendurchmesser der Rohrhülse ist.

Ein weiterer Vorteil besteht insbesondere darin, dass die Rohrhülse mit Hilfe einer weiteren Rohr-Schraubverbindung an die Schlauch- oder Rohrleitung angeschlossen ist, die im Wesentlichen flexibel ausgebildet ist.

Vorteilhaft ist es auch, dass das in der Schlauch- bzw. Rohrleitung und dem Druckrohr aufgenommene Thermoelement von einer Ummantelung umgeben ist, die zumindest teilweise aus einem mineralisolierenden Werkstoff gebildet ist.

Ferner ist es vorteilhaft, dass zumindest ein Teil der Rohrleitung und des Druckrohrs sowie die Endstücke der Rohrhülse und des Druckrohrs über die Abdichtvorrichtung miteinander verbunden und auf einer geradlinig verlaufenden Mittelachse angeordnet sind.

In weiterer vorteilhafter Ausgestaltung ist es vorgesehen, dass zumindest Teile der Rohrleitung und des Druckrohrs über ein oder mehrere Stützelemente im Sicherheitsbehälter des Reaktors abgestützt sind. Auf diese Weise kann vermieden werden, dass Erschütterungen auf die Rohrleitungen übertragen und diese beschädigt werden. Hierdurch kann ebenfalls keine Elektronenübertragungs-Reaktion (Spannungsreihe) zwischen den unterschiedliche Materialien aufweisenden Rohrteilen stattfinden, wenn Druckrohr und Rohrhülse aus unterschiedlichen Werkstoffen, insbesondere Edelmetallen, bestehen.

Hierzu ist es vorteilhaft, dass das Endstück der Rohrhülse in einem rohrförmigen, zylindrischen Innenraum am Ende des Druckrohrs aufgenommen ist, wobei der Innenraum durch einen sich radial erstreckenden Boden begrenzt wird, an den sich eine zylindrische Öffnung mit kleinerem Durchmesser anschließt, durch die das Thermoelement geführt ist, wobei eine Stirnseite des Endstücks der Rohrhülse mit einem Abstand zur zylindrischen Öffnung angeordnet ist.

In einer vorteilhaften Weiterbildung ist es vorgesehen, dass das Druckrohr zur Aufnahme des Thermoelements und/oder die Abdichtvorrichtung von einer druckführenden Umschließung, insbesondere von einem Druckgehäuse, umgeben ist, das zumindest teilweise von einem Isolierkörper umgeben ist, der zumindest teilweise aus Mineralwerkstoffen besteht und am Druckbehälter des Reaktors angeschlossen bzw. diesem zugeordnet ist.

Ein Ausführungsbeispiel der Erfindung wird nachfolgend anhand einer Zeichnung näher erläutert. Darin zeigen:
- Fig. 1: eine ausschnittsweise, schematische Darstellung einer kerntechnischen Anlage mit einem Druckbehälter und einem Sicherheitsbehälter, einer Abdichtvorrichtung im Bereich der hitzeisolierenden Schicht im oberen Bereich des Druckbehälters mit einem in den Druckbehälter geführten Thermoelement und einer außerhalb des Sicherheitsbehälters angeordneten Auswerteeinheit, wobei zusätzlich die Abdichtvorrichtung in vergrößerter Darstellung im Teilschnitt gezeigt ist, und
- Fig. 2: die Abdichtvorrichtung gemäß Fig. 1 im Querschnitt in vergrößerter Ansicht.

Gleiche Teile sind in allen Figuren mit denselben Bezugszeichen versehen.

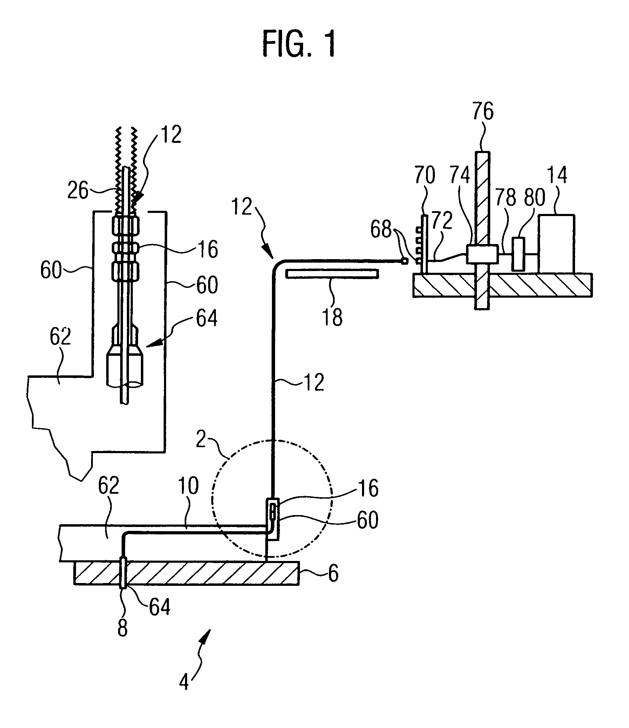

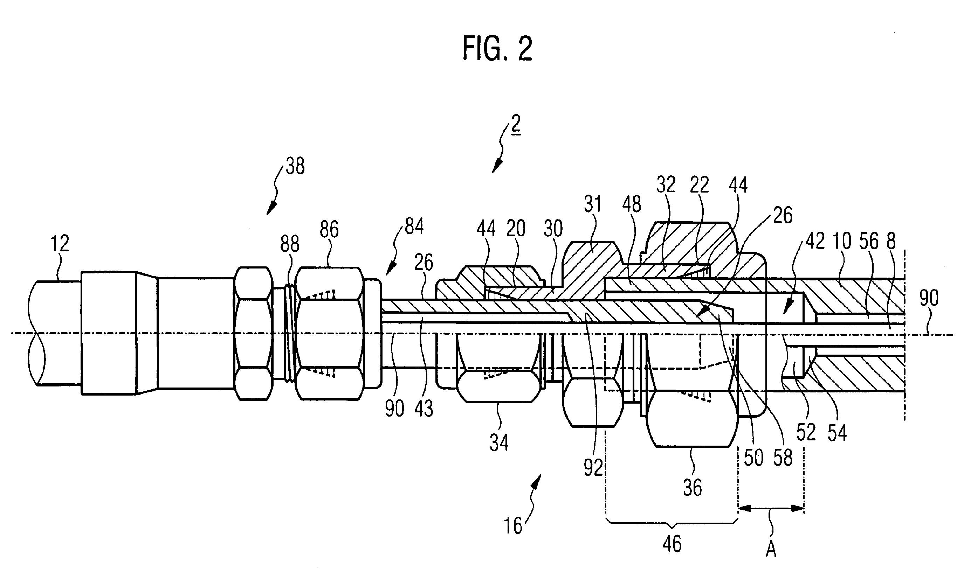

Eine in Fig. 1 in einer Seitenansicht im Teilschnitt und in Fig. 2 im Querschnitt dargestellte Abdichtvorrichtung 2 dient zur Führung eines Thermoelements 8 für eine Vorrichtung zur Füllstandsmessung 4 in einem Flüssigkeitsbehälter, welche den Pegelstand der Kühlflüssigkeit in einem Reaktordruckbehälter überwacht. Im Ausführungsbeispiel gemäß Fig. 1 ist der Reaktordruckbehälter mit der Bezugszahl 6 angedeutet. Der Reaktordruckbehälter 6 ist von einem Containment, auch Sicherheitsbehälter genannt, umschlossen. Der Sicherheitsbehälter dient dazu, im Normalbetrieb, vor allem aber bei Unfällen, die Umgebung der Anlage vor Schaden zu schützen. Der Sicherheitsbehälter ist in Fig. 1 durch eine Wand 76 angedeutet. Die übrigen Teile der Reaktoranlage sind der Einfachheit halber nicht dargestellt.

Üblicherweise ist eine Mehrzahl von beheizten Thermoelementen in zumeist regelmäßigen Abständen voneinander an einem stab- oder röhrenförmigen Träger oder an einem länglichen Messrohr angeordnet, das in die hinsichtlich ihres Pegelstands zu überwachende Flüssigkeit eintaucht und in dessen Innerem auch die zur Stromversorgung der Heizelemente und zur Signalübermittlung an eine externe Auswerteeinheit notwendigen Versorgungs- und Signalleitungen geführt sind. Die in verschiedenen Höhen angeordneten Sensoren oder Messpositionen ermöglichen somit eine digitale, räumlich diskrete Anzeige der Füllstandshöhe im Behälter, wobei die (örtliche) Auflösung von der Anzahl der Thermosensoren pro Höhenabschnitt abhängt. Eine Messvorrichtung dieser Art ist beispielsweise aus der RU 2153712 C1 bekannt. Neben den als primären Signalgebern wirksamen beheizten Thermoelementen ist dabei auch noch eine Mehrzahl von unbeheizten Thermoelementen im Inneren des Messrohrs angeordnet, die ein dem jeweiligen Primärsignal zugeordnetes Referenzsignal liefern. Auf diese Weise lässt sich bei der Auswertung der Temperaturinformationen und der daraus abgeleiteten Ermittlung der Füllstandshöhe auch eine zeitliche Variation der Flüssigkeits - oder Umgebungstemperatur berücksichtigen. Ohne eine derartige Maßnahme könnte beispielsweise ein Anstieg oder eine Senkung der Flüssigkeitstemperatur fälschlicherweise als Variation der Füllhöhe gedeutet oder eine tatsächliche Veränderung der Füllhöhe durch eine gleichzeitige Temperaturänderung der Flüssigkeit "verdeckt" werden. Im Ausführungsbeispiel gemäß Fig.1 und Fig. 2 ist lediglich ein Thermoelement 8 der erwähnten Messvorrichtung oder Füllstandssonde näher erläutert.

Das Thermoelement 8 ist mit Hilfe eines Druckrohrs 10 über die Abdichtvorrichtung 2 und eine weitere Rohr-Schraubverbindung 38 an die Druckbehälterwand des Reaktordruckbehälters 6 angeschlossen und mittels einer Durchführung 64 durch die Druckbehälterwand geführt.

Wie aus Fig. 1 hervorgeht, ist an der Druckbehälterwand 6 des Reaktorbehälters ein Isolierkörper 62 vorgesehen, der das Druckrohr 10 umgibt. Dem Isolierkörper 62 ist ein Druckgehäuse 60 zugeordnet bzw. an einer Außenseite des Isolierkörpers 62 befestigt. Das Druckgehäuse 60 umgibt eine Rohr-Schraubverbindung 16, die in Fig. 2 vergrößert veranschaulicht ist. In Fig. 2 ist zur deutlicheren Darstellung der Abdichtvorrichtung 2, insbesondere der Rohr-Schraubverbindung 16, das Druckgehäuse 60 nicht dargestellt.

Das Druckrohr 10 ist mit Hilfe der Rohr-Schraubverbindung 16 an eine Rohrleitung 12 angeschlossen, die im Sicherheitsbehälter bzw. Containment mit einem oder mehreren Stützelementen 18 derart abgestützt ist, dass keine Schwingungen oder Erschütterungen auf die Rohrleitung 12, das Druckrohr 10 und deren Verbindungen 2 übertragen werden und diese in einem Störfall beschädigen. Die Rohrleitung 12, das Druckrohr 10 und deren Verbindungenen 2 müssen so ausgebildet und im Sicherheitsbehälter verlegt sein, dass sie auch bei Auftreten eines Gaus noch einsatzfähig sind und das oder die Thermoelemente 8 die notwendigen Messergebnisse einer Auswerteeinheit 14 zur Verfügung stellen können.

Im Ausführungsbeispiel gemäß Fig. 2 ist die Abdichtvorrichtung 2 für die Vorrichtung zur Füllstandsmessung 4 in einem Flüssigkeitsbehälter, insbesondere im Druckbehälter 6 eines Reaktorbehälters einer kerntechnischen Anlage, ausgelegt. Die Abdichtvorrichtung 2 umfasst die Rohr-Schraubverbindung 16 und die weitere Rohr-Schraubverbindung 38.

Die Rohr-Schraubverbindung 38 dient zur Verbindung der Rohrleitung 12 an eine Rohrhülse 26 und die Rohr-Schraubverbindung 16 zur Verbindung der Rohrhülse 26 mit dem Druckrohr 10. In der Rohrleitung 12 und dem Druckrohr 10 ist das Thermoelement 8 geführt. Die Ummantelung bzw. Isolierung des Thermoelements 8 enthält Mineralwerkstoffe, die mit Hilfe der Rohr-Schraubverbindung 38 und der Rohr-Schraubverbindung 16 wie nachstehend näher erläutert, abgedichtet sind.

In der Rohrleitung 12 und in dem Druckrohr 10 ist das Thermoelement 8 geführt und gemäß Fig. 1 mit Hilfe eines Steckers und einer Kupplung 68 an eine Montagewand 70 des Sicherheitsbehälters bzw. des Containments 76 angeschlossen. Das Thermoelement 8 ist an ein Ausgleichselement 72 angeschlossen und von dort über eine Durchführung 74 durch den Sicherheitsbehälter bzw. das Containment 76 und ein Kompensationskabel 78 sowie einen Umverteiler 80 an eine Auswerteeinheit 82 angeschlossen, in der die Messergebnisse überwacht werden.

Die mit Hilfe der Rohr-Schraubverbindung 38 an die Rohrleitung 12 angeschlossene Rohrhülse 26 ist in eine Bohrung 84 einer Rohrmutter 86 geschoben und mit dieser verbunden. Die Rohrmutter 86 ist hierzu auf ein Gewindeteil 88 der Rohr-Schraubverbindung 38 geschraubt.

Auf die Rohrhülse 26 ist ein Anschlusselement 31, nachstehend auch als Mittelteil bezeichnet, geschoben und stützt sich damit auf der Rohrhülse 26 ab. Das Anschlusselement bzw. Mittelteil 31 umfasst zwei sich diametral erstreckende Anschlussstücke 30, 32 mit je einem Gewindestück 20 bzw. 22, die koaxial zu einer Mittelachse 90 ausgerichtet sind, wobei das eine Gewindestück 20 mit Hilfe einer Verschraubung 34 an die Rohrhülse 26 und das andere Gewindestück 22 mit Hilfe einer weiteren Verschraubung 36 an das Druckrohr 10 druckwasserfest angeschlossen ist. Das Anschlusselement 31 bildet mit den beiden Anschlussstücke 30, 32 ein Teil. Zur einwandfreien Abdichtung dient ein konisch ausgebildetes Dichtungselement bzw. ein Quetschring 44, der jeweils in eine am Ende des Gewindestücks 20 bzw. 22 vorgesehene konische Eindrehung eingesetzt ist und durch Aufschrauben der Rohrmutter 34, 36 das Druckrohr 10 druckwasserdicht bzw. gegen den Druck im Reaktorbehälter und ferner gegen die Rohrleitung 12 abdichtet. Die Rohrhülse 26 und das Druckrohr 10 können aus einem nichtrostenden Stahl hergestellt sein.

Das Druckrohr 10 und die Rohrhülse 26 weisen je ein Endstück 48 bzw. 50 auf, die aufeinander geschoben sind und dadurch einen Überlappungsbereich 46 bilden, der eine Länge aufweist, die kleiner, gleich groß oder größer als der Außendurchmesser der Rohrhülse 26 ist. In diesem Überlappungsbereich 46 berühren sich die beiden Endstücke 48, 50 nicht.

Die beiden Anschlussstücke 30, 32 sind ein fester Bestandteil des rohrförmigen Anschlusselements 31 mit den entsprechenden Gewindestücken 20, 22, die unterschiedlich große Innendurchmesser aufweisen, wobei das Anschlussstück 30 mit dem kleineren Innendurchmesser auf das stirnseitige Ende der Rohrhülse 26 und das Anschlussstück 32 mit dem größeren Innendurchmesser auf das stirnseitige Ende des Druckrohrs 10 geschoben ist. Zwischen dem Innendurchmesser des rohrförmigen Druckrohrs 10 und dem Außendurchmesser der Rohrhülse 26 ist ein Ringspalt 42 und zwischen dem Außendurchmesser des Thermoelements 8 und dem Innendurchmesser der Rohrhülse 26 ein weiterer Ringspalt 43 gebildet, sodass sich die beiden Endstücke 48, 50, wie bereits erwähnt, gegenseitig nicht kontaktieren. Hierdurch kann bei unterschiedlicher Ausdehnung von Thermoelement 8 und Rohrhülse 26 sowie Druckrohr 10 ein Längenausgleich stattfinden. Die beiden Ringspalte dienen als Dehnfuge zwischen dem Druckrohr, der Rohrhülse und dem Thermoelement, insbesondere dann, wenn diese Teile unterschiedlich große Wärmekoeffizienten aufweisen. In dem Ringspalt 42 sammelt sich Dampf aus dem Druckraum des Reaktors, der gegenüber dem Ringspalt 43 und der sich daran anschließenden Rohrleitung 12 mit Hilfe einer Lötverbindung 92 zwischen Thermoelement 8, dem vorderen Endstück 50 der Rohrhülse 26 und der Rohr-Schraubverbindung 16 abgedichtet wird.

Die Lötverbindung 92 dient auch vorzugsweise der Verbindung von Thermoelement 8 und Rohrhülse 26. Die Lötverbindung kann mit bekannten Verfahren, die beispielsweise bei Strahlrohren und Füllstandsfühlern Verwendung finden, hergestellt werden. Der Überlappbereich von Anschlusselement 31 und Lötverbindung 92 entlang der Mittelachse 90 sollte möglichst klein gehalten werden, um eine direkte Übertragung von Schwingungen, Vibrationen oder Erschütterungen der Verschraubungselemente über die Rohrhülse 26 auf das Thermoelement 8 gering zu halten. Rohrleitungsseitig verhindert der Ringspalt 43 zwischen Rohrhülse 26 und Thermoelement 8 Beschädigungen des Thermoelements 8 durch Schwingungen der Abdichtvorrichtung 2.

Das Druckrohr 10, insbesondere die Rohrhülse 26, ist starr bzw. bis zu einem gewissen Grad verwindungssteif ausgebildet. Mit Hilfe der Abdichtvorrichtung 2 wird eine schonende Verbindung zwischen der Rohrleitung 12, dem Druckrohr 10 und dem Thermoelement 8 geschaffen, so dass die einen isolierenden Mineralwerkstoff aufweisende Ummantelung des Thermoelements 8 nicht beschädigt wird.

Hierzu ist es auch vorteilhaft, dass das Endstück 50 der Rohrhülse 26 in einem rohrförmigen, zylindrischen Innenraum 52 am Ende des Druckrohrs 10 aufgenommen ist, wobei der Innenraum 52 durch einen sich radial erstreckenden Boden 54 begrenzt wird, an den sich eine zylindrische Öffnung 56 mit kleinerem Durchmesser anschließt, durch die das Thermoelement 8 weitergeführt ist, wobei eine Stirnseite 58 des Endstücks 50 der Rohrhülse 26 mit Abstand A zur zylindrischen Öffnung 56 angeordnet ist.

### Bezugszeichenliste

| | |
|---|---|
| 2 | Abdichtvorrichtung |
| 4 | Vorrichtung zur Füllstandsmessung |
| 6 | Druckbehälterwand eines Reaktorbehälters, Druckbehälter |
| 8 | Thermoelement |
| 10 | Druckrohr |
| 12 | Rohrleitung |
| 14 | Auswerteeinheit |
| 16 | Rohr-Schraubverbindung |
| 18 | Stützelement |
| 20 | Gewindestück |
| 22 | Gewindestück |
| 26 | Rohrhülse |
| 30 | Anschlussstück |
| 31 | Anschlusselement, Mittelteil |
| 32 | Anschlussstück |
| 34 | Rohrmutter, Verschraubung |
| 36 | Rohrmutter, Verschraubung |
| 38 | Rohr-Schraubverbindung |
| 42 | Ringspalt |
| 43 | weiterer Ringspalt |
| 44 | Dichtungselement, Quetschring |
| 46 | Überlappungsbereich |
| 48 | Endstück |
| 50 | Endstück |
| 52 | Innenraum |
| 54 | Boden |
| 56 | Öffnung |
| 58 | Stirnseite |
| 60 | Druckgehäuse |
| 62 | Isolierkörper |
| 64 | Durchführung durch die Druckbehälterwand |
| 68 | Stecker, Kupplung |
| 70 | Montagewand für Kupplung |
| 72 | Ausgleichselement |
| 74 | Durchführung durch einen Sicherheitsbehälter bzw. ein Containment |
| 76 | Wand des Sicherheitsbehälters bzw. des Containments |
| 78 | Kompensationskabel |
| 80 | Unterverteiler |
| 82 | Auswerteeinheit |
| 84 | Bohrung |
| 86 | Rohrmutter |
| 88 | Gewindeteil |
| 90 | Mittelachse |
| 92 | Lötverbindung |
| A | Abstand |

## Patentansprüche

1. Vorrichtung (4) zur Füllstandsmessung in einem druckführenden Flüssigkeitsbehälter, die ein nach Art eines mineralisolierten Kabels ausgeführtes Thermoelement (8) umfasst, wobei
• das Thermoelement (8) zumindest teilweise in einem aus dem Flüssigkeitsbehälter heraus geführten Druckrohr (10) angeordnet ist,
• eine in einem Teilabschnitt mit dem Thermoelement (8) verlötete Rohrhülse (26) vorhanden ist, die das Thermoelement (8) umgibt,
• eine als Druckbarriere wirksame Abdichtvorrichtung (2) vorhanden ist,
• die Abdichtvorrichtung (2) ein Anschlusselement (31) aufweist, welches die Rohrhülse (26) umgreift und sich auf der Rohrhülse (26) abstützt, mit einem das Druckrohr (10) umgreifenden hochdruckseitigen Anschlussstück (32) und einem dazu diametralen Anschlussstück (30),
• das hochdruckseitige Anschlussstück (32) über eine an einem Gewindestück (22) des Anschlusselements (31) angreifende Verschraubung (36) mit dem Druckrohr (10) verbunden ist,
• das zu dem hochdruckseitigen Anschlussstück (32) diametrale Anschlussstück (30) des Anschlusselementes (31) über eine an einem Gewindestück (20) des Anschlusselementes (31) angreifende Verschraubung (34) an die Rohrhülse (26) angeschlossen ist, und
• das Druckrohr (10) durch einen Ringspalt (42) von der Rohrhülse (26) beabstandet ist.

2. Vorrichtung nach Anspruch 1, wobei die mit dem Druckrohr (10) zusammenwirkende Verschraubung (36) eine Rohrmutter umfasst, die auf ein Gewindestück (22) des hochdruckseitigen Anschlussstücks (32) geschraubt ist und dabei ein Dichtungselement (44) gegen den Außenumfang des Druckrohrs (10) drückt.

3. Vorrichtung nach Anspruch 1 oder 2, wobei die Rohrhülse (26) außerhalb des Teilabschnitts, in dem sie mit dem Thermoelement (8) verlötet ist, durch einen Ringspalt (43) vom Thermoelement (8) beabstandet ist.

4. Vorrichtung nach einem der Ansprüche 1 bis 3, wobei die mit der Rohrhülse (26) zusammenwirkende Verschraubung (34) eine Rohrmutter umfasst, die auf ein Gewindestück (20) des zu dem hochdruckseitigen Anschlussstück (32) diametralen Anschlussstücks (30) geschraubt ist und dabei ein Dichtungselement (44) gegen den Außenumfang der Rohrhülse (26) drückt.

5. Verwendung einer Vorrichtung (4) nach einem der Ansprüche 1 bis 4 in einem Reaktordruckbehälter einer kerntechnischen Anlage.

## Claims

1. A device (4) for level measuring in a pressure-conducting liquid container, comprising a thermocouple (8) designed in the manner of a mineral-insulated cable, wherein
• the thermocouple (8) is arranged, at least partially, in a pressure pipe (10) leading out of the liquid container,
• a tube jointing sleeve (26) exists, which is soldered together in a partial section with the thermocouple (8) and which encloses the thermocouple (8),
• a sealing device (2) exists, which acts as a pressure barrier,
• the sealing device (2) includes a connection element (31), which encompasses the tube jointing sleeve (26) and rests on the tube jointing sleeve (26), and which has a high-pressure-side connection piece (32) encompassing the pressure pipe (10) and a connection piece (30) which is diametrical thereto,
• the high-pressure-side connection piece (32) is connected with the pressure pipe (10) via a screw joint (36) acting on a threaded piece (22) of the connection element (31),
• the connection piece (30) of the connection element (31), which is diametrical to the high-pressure-side connection piece (32), is connected to the tube jointing sleeve (26) via a screw joint (34) acting on a threaded piece (20) of the connection element (31), and
• the pressure pipe (10) is spaced from the tube jointing sleeve (26) by an annular gap (42).

2. The device of claim 1, wherein the screw joint (36) cooperating with the pressure pipe (10) comprises a pipe nut, which is screwed onto a threaded piece (22) of the high-pressure-side connection piece (32), thus pressing a sealing element (44) against the outer periphery of the pressure pipe (10).

3. The device of claim 1 or 2, wherein the tube jointing sleeve (26) is spaced from the thermocouple (8), outside the partial section where it is soldered together with the thermocouple (8), by an annular gap (43).

4. The device of any of claims 1 to 3, wherein the screw joint (36) cooperating with the tube jointing sleeve (26) comprises a pipe nut, which is screwed onto a threaded piece (20) of the connection piece (30), which is diametrical to the high-pressure-side connection piece (32), thus pressing a sealing element (44) against the outer periphery of the tube jointing sleeve (26).

5. Use of a device (4) of any of claims 1 to 4 in a reactor pressure vessel of a nuclear power plant.

## Revendications

1. Dispositif (4) pour mesurer le niveau dans un réservoir à liquides conducteur de pression, comprenant un thermocouple (8) conçu de la manière d'un câble isolé par minérai, dans lequel
• le thermocouple (8) est disposé, au moins en partie, dans un tube de pression (10) sortant du réservoir à liquides,
• un couvre-joint tubulaire (26) existe, qui est brasé dans une section partielle au thermocouple (8) et qui entoure le thermocouple (8),
• un dispositif d'étanchéité (2) existe, qui fait fonction de barrière de pression,
• le dispositif d'étanchéité (2) comprend un élément de raccordement (31), qui enveloppe le couvre-joint tubulaire (26) et s'appuie sur le couvre-joint tubulaire (26), avec une pièce de raccordement (32) du côté haute pression qui enveloppe le tube de pression (10) et une pièce de raccordement (30) qui est diamétrale à celle-ci,
• la pièce de raccordement (32) du côté haute pression est reliée avec le tube de pression (10) au moyen d'un raccord à vis (36) agissant sur une pièce filetée (22) de l'élément de raccordement (31),
• la pièce de raccordement (30) de l'élément de raccordement (31), qui est diamétrale à la pièce de raccordement (32) du côté haute pression est reliée avec le couvre-joint tubulaire (26) au moyen d'un raccord à vis (34) agissant sur une pièce filetée (20) de l'élément de raccordement (31), et
• le tube de pression (10) est espacé du couvre-joint tubulaire (26) par une fente annulaire (42).

2. Dispositif d'après là revendication 1, dans lequel le raccord à vis (36) concourant avec le tube de pression (10) comprend un écrou de tube qui est vissé sur une pièce filetée (22) de la pièce de raccordement (32) du côté haute pression, pressant ainsi un élément d'étanchéité (44) contre la périphérie extérieure du tube de pression (10).

3. Dispositif d'après la revendication 1 ou 2, dans lequel le couvre-joint tubulaire (26) est espacé du thermocouple (8), hors de la section partielle où il est brasé au thermocouple (8), par une fente annulaire (43).

4. Dispositif d'après l'une quelconque des revendications 1 à 3, dans lequel le raccord à vis (36) concourant avec le couvre-joint tubulaire (26) comprend un écrou de tube qui est vissé sur une pièce filetée (20) de la pièce de raccordement (30) qui est diamétrale à la pièce de raccordement (32) du côté haute pression, pressant ainsi un élément d'étanchéité (44) contre la périphérie extérieure du couvre-joint tubulaire (26).

5. Utilisation d'un dispositif (4) d'après l'une quelconque des revendications 1 à 4 dans une cuve sous pression d'une installation nucléaire.
